# FASCICULE DE BREVET EUROPEEN

(11) **EP 3 508 011 B1**
(45) Date de publication et mention de la délivrance du brevet: **27.10.2021**
(21) Numéro de dépôt: 17761478.1
(22) Date de dépôt: 31.08.2017
(51) Int. Cl.: H04W 64/00, G01S 5/02

(54) **PROCEDE ET DISPOSITIF DE GEOLOCALISATION COLLABORATIVE SUR UN VOISINAGE**
VERFAHREN UND GERÄT ZUR KOLLABORATIVEN GEOLOKALISIERUNG IN EINER NACHBARSCHAFT
METHOD AND DEVICE FOR COLLABORATIVE GEOLOCATION IN A NEIGHBOURHOOD

(30) Priorité: 01.09.2016 FR 1601292
(43) Date de publication de la demande: 10.07.2019
(73) Titulaire: Thales, 92400 Courbevoie (FR)
(72) Inventeur: HEURGUIER, Dominique, 92622 Gennevilliers Cedex (FR)
(74) Mandataire: Marks & Clerk France
(86) Numéro de dépôt international: PCT/EP2017/071857
(87) Numéro de publication internationale: WO 2018/041941

(56) Documents cités:
- WO-A2-2010/028278
- YICK J ET AL: "Wireless sensor network survey", COMPUTER NETWORKS, ELSEVIER, AMSTERDAM, NL, vol. 52, no. 12, 22 août 2008 (2008-08-22) , pages 2292-2330, XP022825257, ISSN: 1389-1286, DOI: 10.1016/J.COMNET.2008.04.002 [extrait le 2008-04-14]
- TAO JIA ET AL: "On the optimal performance of collaborative position location", IEEE TRANSACTIONS ON WIRELESS COMMUNICATIONS, IEEE SERVICE CENTER, PISCATAWAY, NJ, US, vol. 9, no. 1, 1 janvier 2010 (2010-01-01) , pages 374-383, XP011299483, ISSN: 1536-1276

## Description

L'invention concerne un procédé de géolocalisation collaborative en groupe, mettant en jeu plusieurs nœuds dans un réseau de communication. Dans le procédé selon l'invention, les nœuds échangent entre eux des informations de distance et/ou de position, par exemple, ou d'autres paramètres utiles pour la géolocalisation, afin de disposer d'un système de navigation plus performant.

Les nœuds peuvent être des nœuds mobiles qui changent de position dans le réseau de radiocommunication (par exemple des piétons ou des véhicules en réseau).

La gestion des échanges d'informations dans le cas de la navigation collaborative devient un problème lorsque le nombre de nœuds présents dans un réseau de communication est important, typiquement au-delà de quelques dizaines de nœuds. Dans ce cas, certains nœuds peuvent se trouver distants les uns des autres de plus d'une dizaine de bonds, ce qui pose à la fois des problèmes de congestion et de délai d'acheminement des informations, lorsque chaque nœud doit diffuser les informations dont il dispose à tous les autres nœuds du réseau. Les solutions de calcul global de la géolocalisation connues de l'art antérieur se heurtent à la fois à un problème de forte combinatoire (nombre d'informations à prendre en compte important dans le calcul) induite par les réseaux de grande taille et à la difficulté de récupérer en temps limité des informations venant de tous les nœuds (limitation des protocoles d'échange, comme évoqué ci-dessus, pour rapatrier sur chaque nœud toutes les informations des autres nœuds dans des délais contraints). Ceci rend généralement très difficile, voire impossible, le calcul d'une solution globale en temps contraint et, in fine, d'une solution pouvant être actualisée facilement et remise à jour en fonction du temps de cycle de géolocalisation. Le cycle de géolocalisation est, par exemple, défini par des instants déclencheurs du procédé de géolocalisation.

Les mesures de distance entre voisins peuvent être obtenues par des mesures sur la forme d'onde du réseau de radiocommunication ou par un équipement complémentaire. Dans ce dernier cas, on définit le graphe orienté de télémétrie inter-nœuds en formant une arête (i,j) si le nœud i délivre une mesure de distance du nœud j. Par la suite, sauf mention contraire, les termes graphe ou réseau ne feront référence qu'au graphe de télémétrie, qui coïncide avec le graphe du réseau de communication dans le cas où les mesures de télémétrie sont réalisées sur les liens radio.

L'art antérieur décrit également des méthodes de géolocalisation locale qui comportent un calcul de positionnement d'un nœud à géolocaliser en exploitant les voisins directs du nœud (du graphe de télémetrie) qui disposent eux-mêmes d'une estimation de leur position. Cette solution ne fonctionne que si au moins trois nœuds voisins disposent d'une estimation de position pour eux-mêmes. De plus, elle est peu précise lorsque le nombre de voisins est faible.

Dans le cas où l'on ne dispose pas d'au moins trois nœuds ayant une estimation de position, une extension de cette solution consiste, par exemple, à itérer le processus de géolocalisation à partir des voisins, i.e., en essayant à nouveau d'obtenir une géolocalisation du nœud courant au prochain cycle, ce qui sera possible si au moins trois nœuds voisins parviennent à se géolocaliser. Cependant, une telle solution ne permet pas toujours de trouver des solutions de géolocalisation dans des situations pourtant observables, notamment si aucun nœud du réseau ne dispose d'au moins trois voisins géolocalisés. Ceci reste vrai dans le cas où des solutions de géolocalisation sont obtenues, celles-ci étant généralement peu précises et insuffisamment actualisées en présence de nœuds mobiles.

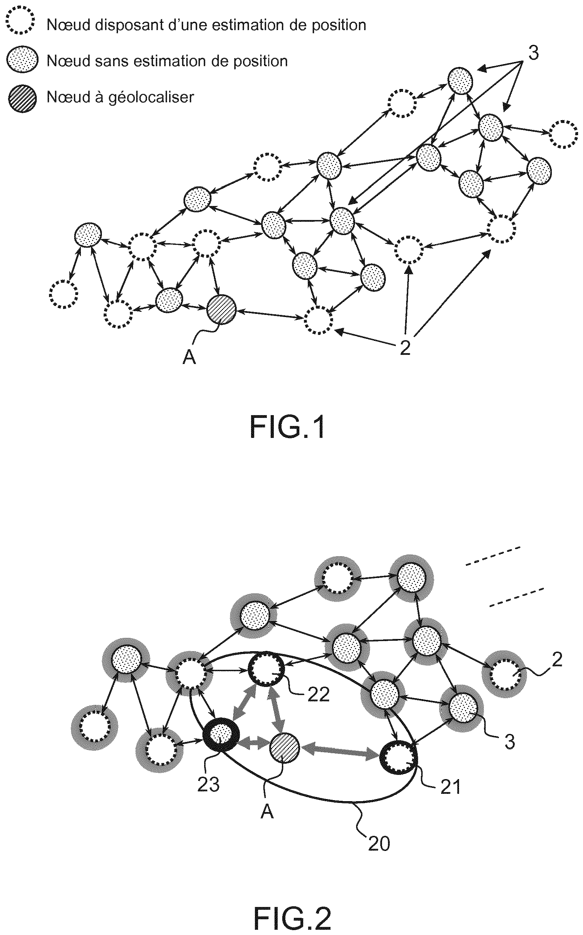

La figure 1 illustre un réseau avec un nœud à géolocaliser A, plusieurs nœuds 2 disposant d'une estimation de position, plusieurs nœuds 3 sans estimation de position. Tous les nœuds communiquent entre eux par des moyens de communication et un protocole de communication connus de l'homme du métier. Cette solution est valide si tous les nœuds sont observables. Toutefois, elle présente comme inconvénient de requérir un temps de calcul important pour estimer une position. Un nœud est dit « observable », si ce dernier est capable d'estimer ses données de position au sein du réseau. On définit également le degré d'observabilité Dₙ d'un nœud n comme étant le nombre de bonds requis pour qu'il puisse se géolocaliser au sein du sous-réseau de voisinage à Dₙ bonds du nœud n, avec par convention un degré d'observabilité nul, si le nœud dispose déjà d'une propre estimation de position. Cette estimation de position peut être obtenue, par exemple à l'aide d'un capteur GPS en poursuite.

La figure 2 illustre le cas où la géolocalisation du nœud courant A est impossible avec une approche classique sur voisinage direct, car le procédé ne dispose pas d'au moins trois nœuds voisins ayant une estimation de position. La figure 2 schématise un périmètre 20 contenant le nœud à géolocaliser A, deux nœuds voisins 21, 22 disposant d'une estimation de position et d'un nœud voisin 23 ne disposant pas d'estimation de position et qui ne contribue pas à la géolocalisation du nœud A. Ce cas ne permet donc pas de géolocaliser le nœud A.

Le document intitulé « Localisation collaborative pour réseaux de capteurs» de Karel Heurtefeux et Fabrice Valois, HAL Id: hal-00250241, https://hal.archives-ouvertes.fr/hal-00250241, divulgue un algorithme de localisation locale qui utilise uniquement la connaissance de la topologie radio et ne fait pas appel à des mesures de ranging ou des mesures de GPS.

Le document de Yick J et al, intitulé « Wireless sensor network survey », Computer Networks, Elsevier, Amsterdam, NL, vol.52, n°12, 22 août 2008, pages 2292-2330, XP022825257, divulgue différents procédés de localisation collaborative par ranging.

Le document de Tao Jia et al, ayant pour titre « On the optimal performance of collaborative position location », IEEE Transactions on Wireless Communications, IEEE Service Center, Piscataway, NJ, US, vol.9, n° 1, 1er janvier 2010, pages 374-383, XP011299483, suppose que le réseau est observable et décrit une méthode permettant de s'approcher de l'estimateur de vraisemblance.

Le procédé selon l'invention repose sur une nouvelle approche qui consiste, notamment, à déterminer un voisinage observable et ensuite à dérouler des étapes de géolocalisation en exploitant les mesures disponibles de ranging et de positions.

Le voisinage observable pour un nœud à géolocaliser est défini comme un ensemble de nœuds contenant le nœud à géolocaliser, ces nœuds étant eux-mêmes observables, c'est-à-dire :
- que ces nœuds sont capables d'estimer leur propre position de façon unique ou qu'ils disposent déjà d'une géolocalisation,
- que ces nœuds communiquent avec le nœud à géolocaliser en diffusant des informations de position et/ou de ranging qui peuvent être utilisées pour géolocaliser le nœud A. La géolocalisation du nœud A est d'autant plus précise que le nombre de mesures et de nœuds de ce voisinage est important.

Notons que la géolocalisation du nœud A implique au niveau du traitement du nœud A, la géolocalisation de l'ensemble des nœuds du voisinage.

L'invention concerne un procédé de géolocalisation collaborative d'un ou de plusieurs nœuds Mi dans un réseau de communication, les nœuds échangeant entre eux au moins des informations de distance et/ou de positions comportant au moins les étapes suivantes :
- Déterminer un premier sous-graphe V₁ de nœuds voisins d'un nœud courant A à géolocaliser, à N bonds,
- Sélectionner dans ledit premier sous-graphe V₁, le plus grand sous-graphe observable V₃, ledit sous-graphe observable étant composé d'un ensemble de nœuds adaptés à estimer leur propre position de façon unique, lesdits nœuds communiquant avec le nœud à géocaliser en diffusant des informations de position et de ranging mesurées par lesdits nœuds,
- Exécuter un algorithme de géolocalisation sur les nœuds du plus grand sous-graphe observable V₃ et déterminer au moins la position du nœud courant A.

Selon une variante, le procédé de géolocalisation est caractérisé en ce qu'il comporte au moins les étapes suivantes :
- Déterminer un premier sous-graphe V₁ des nœuds voisins du nœud courant A en considérant les nœuds à N bonds maximum avec N supérieur ou égal à zéro, puis
- Déterminer le plus grand sous-graphe observable V₃ à partir du premier sous-graphe des voisins V₁ contenant le nœud A, en exécutant les étapes suivantes :
   - Déterminer s'il existe au moins trois nœuds appartenant au premier sous-graphe V₁ et disposant d'une estimation de position,
   - S'il n'existe pas au moins trois nœuds appartenant au premier sous-graphe V₁ et disposant d'une estimation de position alors, il n'y a pas de voisinage observable du nœud A inclus dans le premier sous-graphe V₁ et le nœud A n'est pas localisable,
   - S'il y a au moins trois nœuds appartenant au premier sous-graphe V₁ avec estimation de position, alors, construire un deuxième sous-graphe V₂, en éliminant du premier sous-graphe V₁ les nœuds qui sont différents du nœud A, qui ne contiennent pas d'estimation de position et qui ont un nombre d'arêtes partant du nœud inférieur ou égal à 2,
- Tester si le deuxième sous-graphe V₂ est observable, si c'est le cas on définit le plus grand sous-graphe V₃ comme étant le deuxième sous-graphe V₂,
- Sinon, parcourir les sous-graphes de V₂ contenant le nœud A,
- Exécuter un algorithme de géolocalisation sur les nœuds contenus dans le plus grand sous-graphe V₃ existant, afin de déterminer la position du nœud courant A.

Le test d'observabilité d'un sous-graphe peut mettre en œuvre un test de rigidité globale.

Le test de rigidité globale peut comporter les étapes suivantes :
- Vérifier qu'un sous-graphe reste connexe lorsqu'on enlève deux sommets quelconques,
- Vérifier qu'un sous-graphe reste rigide en enlevant une arête quelconque.

Le procédé s'applique, par exemple, dans un réseau de communication décentralisé pour déterminer la position des nœuds dudit réseau.

L'invention concerne aussi un dispositif de géolocalisation d'un ou de plusieurs nœuds dans un réseau, les nœuds étant équipés d'émetteurs-récepteurs et de moyens de communication caractérisé en ce que chacun des nœuds comporte au moins les éléments suivants :
- Un processeur adapté à exécuter les étapes du procédé selon l'invention,
- Un dispositif permettant à un nœud de se géolocaliser,
- Une table mémorisant les informations de topologie des autres nœuds.

L'invention s'applique dans un réseau de communication ad-hoc.

D'autres caractéristiques et avantages de la présente invention apparaîtront mieux à la lecture de la description qui suit, d'exemples de réalisation donnés à titre illustratif et nullement limitatif, annexée des figures qui représentent :
- Figure 1, un premier exemple d'architecture réseau de télémetrie selon l'art antérieur et Figure 2, un deuxième exemple d'architecture selon l'art antérieur,
- Figure 3, une illustration de la définition d'un nœud observable dans un réseau,
- Figure 4, une illustration des éléments et des modules équipant les nœuds d'un réseau pour la mise en œuvre du procédé selon l'invention,
- Figure 5, une illustration des sous-ensembles de nœuds obtenus par le procédé selon l'invention, et
- Figure 6, un organigramme décrivant un exemple d'étapes mises en œuvre par le procédé.

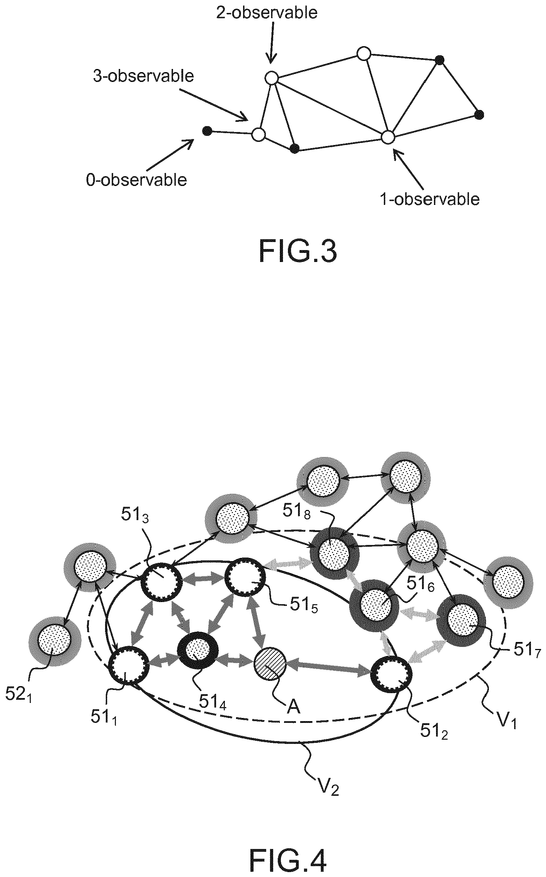

La figure 3 illustre ce que l'on entend par nœud observable ou non observable. Un nœud est dit k-observable (i.e. degré d'observabilité k) s'il existe un sous-réseau de nœuds observables le contenant et inclus dans le sous-réseau du voisinage de n à k bonds.
- Le nœud sera dit 0-observable, avec k=0, si et seulement si le nœud est une ancre, c'est-à-dire que le nœud dispose de sa propre estimation de position, par exemple à l'aide d'un capteur GPS,
- Le nœud sera dit 1-observable, avec k=1, si et seulement si le nœud peut être géolocalisé à partir de ses voisins directs (nœud positionné à un bond du nœud courant) et des éventuelles mesures de ranging entre les voisins eux-mêmes,
- Le nœud sera dit k-observable, avec k>1, si et seulement si le nœud est observable (i.e. géolocalisable) au sein de son voisinage à k bonds, en exploitant les mesures de positions et de ranging des nœuds de ce voisinage.

Afin de mieux faire comprendre le procédé selon l'invention, l'exemple qui suit est donné dans le cas d'un système de communication comprenant plusieurs nœuds Mi. La figure 4 schématise une partie du réseau de communication comprenant les Mi nœuds et les modules équipant ces nœuds. Le procédé dans cet exemple est mis en œuvre de manière décentralisée, c'est-à-dire que chaque nœud est autonome et équipé de moyens de mesure pour la géolocalisation, chaque nœud est capable d'estimer sa propre position de façon unique, et de moyens de communication pour échanger des informations avec les autres nœuds du réseau, connus de l'homme du métier.

Un nœud comporte, par exemple, un dispositif de communication 40, un processeur 41 adapté à exécuter les étapes du procédé selon l'invention et une batterie 42 ou dispositif d'alimentation. Les nœuds Mi communiquent entre eux, par exemple, au moyen d'une liaison radiofréquence sans fil ou par d'autres moyens connus de l'homme du métier. Chaque nœud comporte aussi une mémoire ou table de voisins 43 permettant de stocker les informations de position des autres nœuds et d'avoir une image de la topologie des nœuds du réseau.

Le réseau de communication comporte aussi un dispositif pour déterminer la position absolue de tout ou partie des nœuds. Ainsi, tous les nœuds ou une partie des nœuds peuvent, par exemple, être équipés d'un récepteur 44 qui, couplé avec un dispositif satellitaire 50, permet au nœud équipé du récepteur 44 de se géolocaliser. Ce dispositif de mesures de position peut être un système de géolocalisation GPS (Global Positioning System), un système de navigation satellitaire GNSS (Global Navigation Satellite System), un moyen de topographie, etc. Sur la figure 4, le nœud M₂ est équipé d'un récepteur, alors que le nœud M₃ ne l'est pas.

Il comporte aussi un dispositif de mesures de distance de ses voisins directs ou dispositif de ranging, qui est colocalisé. Le dispositif de ranging peut se présenter sous la forme d'une carte électronique portée par le nœud. Selon une autre variante de réalisation, ce pourrait être une fonctionnalité du système de communication au niveau d'un nœud mesurant le temps mis par l'onde radio pour transiter entre les nœuds.

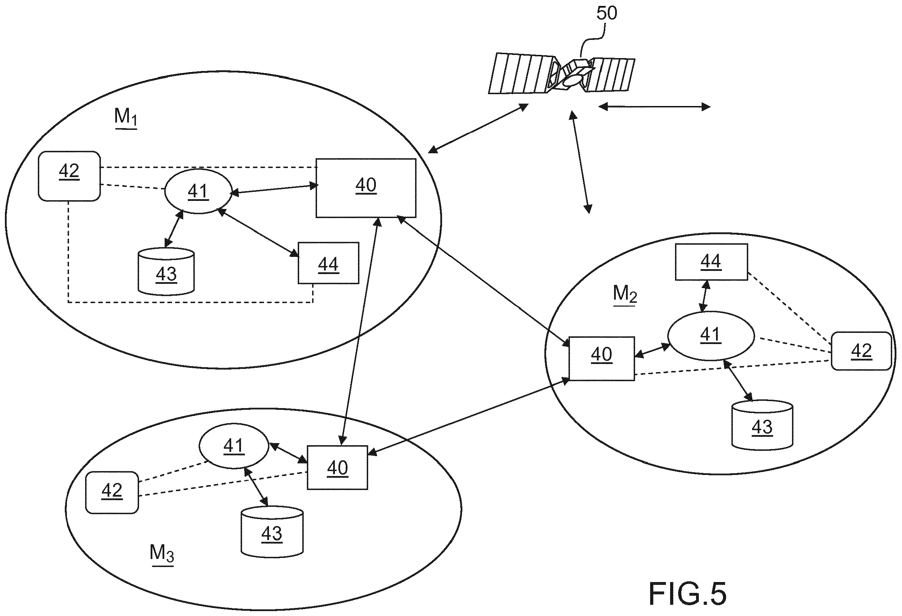

La figure 5 illustre les deux étapes du procédé selon l'invention qui permettent de définir un sous-ensemble de nœuds à partir duquel un procédé de géolocalisation sera exécuté. Le procédé fait appel à la notion de graphe orienté G connu de l'homme du métier. Le graphe est défini par un ensemble de couples (S, B) avec S un ensemble fini de sommets et B un ensemble de couple de sommets correspondant aux nœuds du réseau.

Le nœud A est un nœud à géolocaliser et comporte les différents équipements d'un nœud décrit à la figure 4. Les nœuds 51i sont des nœuds qui comportent une estimation de position, représentés en traits pointillés sur la figure. Les nœuds 52j sont des nœuds qui ne comportent pas d'estimation de position, représentés en traits pleins sur la figure.

Chaque nœud connaît la topologie de ranging du réseau. Il s'agit ici de la topologie de télémétrie pour laquelle deux nœuds i et j sont reliés par une arête orientée (i,j), si i dispose d'une mesure relative de la distance de j. Lorsque le système de télémétrie est intégré à un réseau de radiocommunication de type MANET (Mobile ad hoc networks), la topologie est la topologie d'un réseau de radiocommunication.

Un cycle de géolocalisation est par exemple déclenché au niveau de chacun des nœuds selon une période T, toutes les T secondes ou minutes en fonction de l'application.

L'exemple qui suit va être donné dans le cadre d'une architecture décentralisée dans laquelle chaque nœud va essayer de se géolocaliser en mettant en œuvre le procédé sur son voisinage, i.e., les nœuds dans son voisinage. Les étapes exécutées sont alors les suivantes :
Première étape, Etape 1 : à un instant donné t₀, on détermine le voisinage du nœud courant A à N bonds, avec N supérieur ou égal à 0, le nombre N est par exemple défini en tenant compte de la durée T du cycle de géolocalisation, afin que le procédé ait le temps d'utiliser les informations transmises par les nœuds voisins distants d'au plus N bonds ; le voisinage constitue un premier sous-graphe V₁,
Deuxième étape, Etape 2 : à partir de l'ensemble des voisins à N bonds défini à la première étape, le procédé détermine le plus grand sous-graphe V₂ observable du voisinage à N bonds :
   - contenant au moins le nœud A,
   - dans lequel au moins trois nœuds (sommets) M₁, M₂, M₃ du sous-graphe V₂ disposent d'une estimation de position,
   - qui vérifie la propriété d'être globalement rigide selon la définition connue de l'homme du métier, i.e., sous-graphe 3-connexe et rigide-redondant,
Troisième étape, Etape 3 : le procédé met en œuvre un procédé classique de géolocalisation sur l'ensemble des nœuds contenus dans le plus grand sous-graphe.

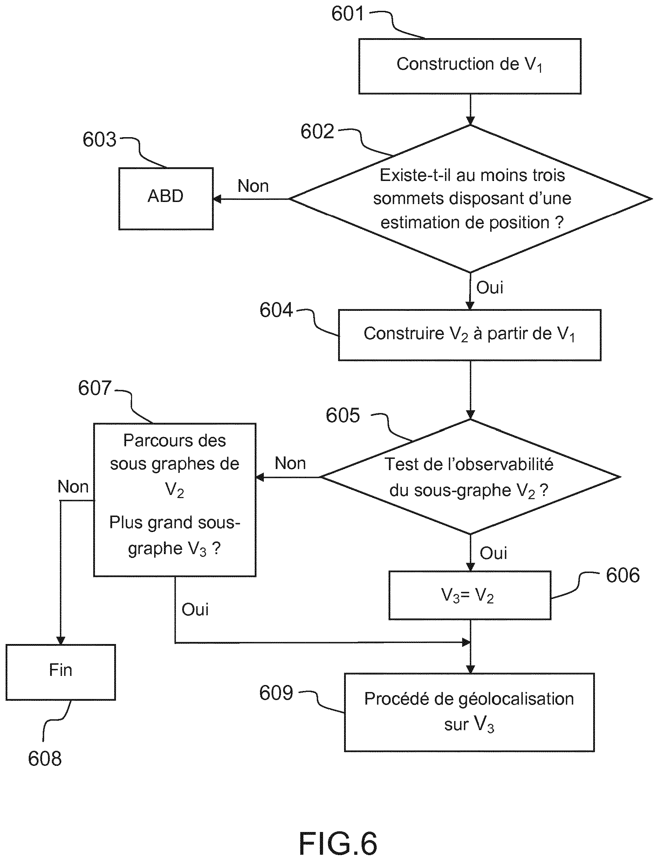

La figure 6 illustre de manière détaillée un organigramme des étapes mises en œuvre par le procédé selon l'invention :
601 - on détermine un ensemble V₁ ou premier sous-graphe des nœuds voisins du nœud courant A à N bonds maximum (N>=0), en utilisant des procédés connus de l'homme du métier basés, par exemple, sur des protocoles d'échanges de tables de voisins ; Le rayon N doit être choisi le plus grand possible en satisfaisant les deux contraintes suivantes dans un cycle de rafraichissement de la localisation : le protocole d'échange de données et le réseau radio doivent permettent de collecter et acheminer l'ensembles des données et mesures des nœuds du sous-graphe V1, un nœud doit disposer d'une capacité de traitement suffisante pour traiter les données collectées et calculer sa position »,
602 - On teste s'il existe au moins trois nœuds appartenant au premier sous-graphe V₁ et disposant d'une estimation de position,
   - S'il n'existe pas au moins trois nœuds appartenant au premier sous-graphe V₁ et disposant d'une estimation de position alors, il n'y a pas de voisinage observable du nœud A inclus dans le sous-graphe V₁ et le procédé s'arrête, il n'est pas possible de localiser le nœud A, 603,
   - S'il y a au moins trois nœuds appartenant au sous-graphe V₁ avec estimation de position, alors on passe à l'étape suivante pour trouver un sous-graphe observable.

On détermine le plus grand sous-graphe observable V₃ à partir du sous-ensemble des voisins V₁ contenant le nœud A, en exécutant par exemple les étapes suivantes :
604 - On construit un deuxième sous-graphe V₂, en éliminant du premier sous-graphe V₁ les nœuds différents du nœud A, qui ne contiennent pas d'estimation de position et qui sont de degré inférieur ou égal à 2 (correspondant au nombre d'arrêtes qui partent d'un nœud), ce qui permet de conserver uniquement les nœuds qui vont servir à l'algorithme de localisation,
605 - On teste si le deuxième sous-graphe V₂ est observable, en utilisant par exemple un test de rigidité globale connu de l'homme du métier,
   - Si le deuxième sous-graphe V₂ est observable, alors le plus grand sous-graphe V₃ est égal au sous-graphe V₂, 606, et l'on passe à l'étape de géolocalisation,
   - Sinon, 607, le procédé parcourt tous les sous-graphes de V₂ en recherchant le plus grand sous-graphe V₃ observable contenant le nœud A, c'est-à-dire le sous-graphe contenant le plus de nœuds capables d'estimer leur position de façon unique, lesdits nœuds communiquant avec le nœud à géolocaliser en diffusant des informations de position et/ou de ranging pour géolocaliser un noeud. Ce parcours peut être exhaustif, mais il peut être optimisé pour éviter de parcourir la totalité des sous-graphes de V₂, par exemple en parcourant les sous-graphes par taille (i.e. nombre de sommets) décroissante et en s'arrêtant dès qu'un sous-graphe observable et contenant le nœud A est observé.
      - Si on ne trouve pas de sous-graphe observable contenant le nœud A, il n'y a pas de voisinage observable du nœud A inclus dans le premier sous-graphe V₁ et le procédé se termine, 608,
      - Si un sous-graphe est observable alors V₃ existe, et on passe à l'étape de géolocalisation, 609,
609 - On exécute un algorithme de géolocalisation sur les nœuds contenus dans le plus grand sous-graphe V₃, afin de déterminer la position du nœud courant A.

Un critère d'observabilité d'un graphe à deux dimensions peut reposer sur l'utilisation du théorème d'Aspnes connu de l'homme du métier, comprenant la vérification de l'existence d'au moins trois ancres dans le graphe (nœuds disposant d'une estimation de leur position absolue propre) et la vérification du caractère globalement rigide du graphe.

Le test de rigidité globale peut être réalisé en exécutant les étapes suivantes connues de l'homme du métier :
- Vérifier que le sous-graphe est 3-connexe, i.e., le graphe reste connexe en enlevant deux sommets quelconques,
- Vérifier que le sous-graphe présente une redondance rigide (le sous-graphe reste rigide en enlevant une arête quelconque ; la rigidité peut être par exemple vérifiée en utilisant le théorème de Laman) et par exemple l'algorithme du « jeu de galets » connu de l'homme du métier.

Le procédé décrit ci-dessus peut être utilisé dans un réseau de communication mobile de type ad-hoc.

Le procédé offre un procédé de géolocalisation collaborative en temps contraint dans des grands réseaux, pour un nombre de nœuds de communication au moins égal à dix. Ceci permet notamment d'obtenir une solution en temps contraint et avec une meilleure précision de géolocalisation que la précision obtenue par les procédés de l'art antérieur.

## Revendications

1. Procédé de géolocalisation collaborative d'un ou de plusieurs nœuds Mi dans un réseau de communication, les nœuds échangeant entre eux des informations de distance et/ou de positions, comportant au moins les étapes suivantes :
• Déterminer un premier sous-graphe V₁ de nœuds voisins d'un nœud courant A à géolocaliser, à N bonds,
• Sélectionner dans ledit premier sous-graphe V₁, le plus grand sous-graphe observable V₃, ledit sous-graphe observable étant composé d'un ensemble de nœuds adaptés à estimer leur propre position de façon unique, lesdits nœuds communiquant avec le nœud à géocaliser en diffusant des informations de position et de ranging mesurées par lesdits noeuds ,
• Exécuter un algorithme de géolocalisation sur les nœuds du plus grand sous-graphe observable V₃ et déterminer au moins la position du nœud courant A.

2. Procédé de géolocalisation selon la revendication 1 **caractérisé en ce qu'**il comporte au moins les étapes suivantes :
• Déterminer un premier sous-graphe V₁ des nœuds voisins du nœud courant A en considérant les nœuds à N bonds maximum avec N supérieur ou égal à zéro, (601), puis
• Déterminer le plus grand sous-graphe observable V₃ à partir du premier sous-graphe des voisins V₁ contenant le nœud A, en exécutant les étapes suivantes :
• Déterminer s'il existe au moins trois nœuds appartenant au premier sous-graphe V₁ et disposant d'une estimation de position, (602),
• S'il n'existe pas au moins trois nœuds appartenant au premier sous-graphe V₁ et disposant d'une estimation de position alors, il n'y a pas de voisinage observable du nœud A inclus dans le premier sous-graphe V₁ et le nœud A n'est pas localisable, (603),
• S'il y a au moins trois nœuds appartenant au premier sous-graphe V₁ avec estimation de position, alors, (604) on construit un deuxième sous-graphe V₂, en éliminant du premier sous-graphe V₁ les nœuds qui sont différents du nœud A, qui ne contiennent pas d'estimation de position et qui ont un nombre d'arêtes partant du nœud inférieur ou égal à 2,
• (605) - Tester si le deuxième sous-graphe V₂ est observable, si c'est le cas définir le plus grand sous-graphe V₃ comme étant le deuxième sous-graphe V₂, (606),
• Sinon, parcourir les sous-graphes de V₂ contenant le nœud A (607),
• Exécuter (609) un algorithme de géolocalisation sur les nœuds contenus dans le plus grand sous-graphe V₃ existant, afin de déterminer la position du nœud courant A.

3. Procédé selon la revendication 2 **caractérisé en ce que** le test d'observabilité d'un sous-graphe met en œuvre un test de rigidité globale.

4. Procédé selon la revendication 3 **caractérisé en ce que** le test de rigidité globale comporte les étapes suivantes :
• Vérifier qu'un sous-graphe reste connexe lorsqu'on enlève deux sommets quelconques,
• Vérifier qu'un sous-graphe reste rigide en enlevant une arrête quelconque.

5. Procédé selon l'une des revendications précédentes **caractérisé en ce que** le réseau est un réseau de communication décentralisé et on détermine la position des nœuds dudit réseau.

6. Dispositif de géolocalisation d'un ou de plusieurs nœuds dans un réseau, les nœuds étant équipés d'émetteurs-récepteurs et de moyens de communication **caractérisé en ce que** chacun des nœuds comporte au moins les éléments suivants :
• Un processeur (41) adapté à exécuter les étapes du procédé selon l'une des revendications 1 à 5,
• Un dispositif (44) permettant à un nœud de se géolocaliser,
• Une table (43) mémorisant les informations de topologie des autres nœuds.

7. Dispositif selon la revendication 6 **caractérisé en ce que** le réseau est un réseau de communication ad-hoc.

## Patentansprüche

1. Verfahren zum kooperativen Geolokalisieren eines oder mehrerer Knoten Mi in einem Kommunikationsnetz, wobei die Knoten Entfernungs- und/oder Positionsinformationen miteinander austauschen, das mindestens die folgenden Schritte umfasst:
• Bestimmen eines ersten Teilgraphen V₁ von Nachbarknoten eines zu geolokalisierenden aktuellen Knotens A mit N Sprüngen,
• Auswählen des größten beobachtbaren Untergraphen V₃ aus dem ersten Untergraphen V₁, wobei der beobachtbare Untergraph aus einer Gruppe von Knoten besteht, die zum eindeutigen Schätzen ihrer eigenen Position ausgelegt sind, wobei die Knoten mit dem zu geolokalisierenden Knoten durch Senden von von den Knoten gemessenen Positions- und Entfernungsinformationen kommunizieren,
• Ausführen eines Geolokalisierungsalgorithmus auf den Knoten des größten beobachtbaren Teilgraphen V₃ und Bestimmen mindestens der Position des aktuellen Knotens A.

2. Geolokalisierungsverfahren nach Anspruch 1, **dadurch gekennzeichnet, dass** es mindestens die folgenden Schritte umfasst:
• Bestimmen eines ersten Teilgraphen V₁ der Nachbarknoten des aktuellen Knotens A unter Berücksichtigung der Knoten mit N maximalen Sprüngen, wobei N größer oder gleich Null ist, (601), dann
• Bestimmen des größten beobachtbaren Teilgraphen V₃ auf der Basis des ersten Teilgraphen der den Knoten A enthaltenden Nachbarn V₁ durch Durchführen der folgenden Schritte:
• Feststellen, ob es mindestens drei Knoten gibt, die zum ersten Teilgraphen V₁ gehören und eine Positionsschätzung haben (602),
• wenn es nicht mindestens drei Knoten gibt, die zum ersten Teilgraphen V₁ gehören und eine Positionsschätzung haben, haben, dann gibt es keine beobachtbare Nachbarschaft des im ersten Teilgraphen V₁ enthaltenen Knotens A und Knoten A ist nicht lokalisierbar, (603),
• wenn es mindestens drei Knoten gibt, die zum ersten Teilgraphen V₁ mit Positionsschätzung gehören, dann, Konstruieren (604) eines zweiten Teilgraphen V₂ durch Eliminieren der Knoten aus dem ersten Teilgraphen V₁, die sich vom Knoten A unterscheiden, die keine Positionsschätzung enthalten und die eine Anzahl kleiner oder gleich 2 von Kanten haben, die von dem Knoten ausgehen,
• (605) - Prüfen, ob der zweite Teilgraph V₂ beobachtbar ist, wenn ja, Definieren des größten Teilgraphen V₃ als den zweiten Teilgraphen V₂, (606),
• wenn nein, Durchsuchen der Teilgraphen von V₂, die den Knoten A enthalten (607),
• Ausführen (609) eines Geolokalisierungsalgorithmus an den im größten vorhandenen Teilgraphen V₃ enthaltenen Knoten, um die Position des aktuellen Knotens A zu bestimmen.

3. Verfahren nach Anspruch 2, **dadurch gekennzeichnet, dass** die Prüfung der Beobachtbarkeit eines Teilgraphen eine globale Steifigkeitsprüfung implementiert.

4. Verfahren nach Anspruch 3, **dadurch gekennzeichnet, dass** die globale Steifigkeitsprüfung die folgenden Schritte umfasst:
• Überprüfen, dass ein Teilgraph zusammenhängend bleibt, wenn zwei beliebige Scheitelpunkte entfernt werden,
• Überprüfen, dass ein Teilgraph starr bleibt, indem eine beliebige Kante entfernt wird.

5. Verfahren nach einem der vorherigen Ansprüche, **dadurch gekennzeichnet, dass** das Netz ein dezentrales Kommunikationsnetz ist und die Position der Knoten des Netzes bestimmt wird.

6. Vorrichtung zur Geolokalisierung eines oder mehrerer Knoten in einem Netz, wobei die Knoten mit Sendern/Empfängern und Kommunikationsmitteln ausgestattet sind, **dadurch gekennzeichnet, dass** jeder der Knoten mindestens die folgenden Elemente umfasst:
• einen Prozessor (41), der zum Durchführen der Schritte des Verfahrens nach einem der Ansprüche 1 bis 5 ausgelegt ist,
• eine Vorrichtung (44), die es zulässt, dass sich ein Knoten geolokalisiert,
• eine Tabelle (43), die die Topologieinformationen anderer Knoten speichert.

7. Vorrichtung nach Anspruch 6, **dadurch gekennzeichnet, dass** das Netz ein Ad-hoc-Kommunikationsnetz ist.

## Claims

1. A method of collaborative geolocation of one or more nodes Mi in a communication network, the nodes inter-exchanging distance and/or position information, comprising at least the following steps:
• Determine a first sub-graph VI of neighbor nodes of a current node A to be geolocated, in N hops,
• Select in said first sub-graph V₁, the largest observable sub-graph V₃, the observable sub-graph being composed of a set of nodes adapted to estimate their own position in a unique manner, said nodes communicating with the node to be geocalized by broadcasting position and ranging information measured by said nodes,
• Execute a geolocation algorithm on the nodes of the largest observable sub-graph V₃ and determine at least the position of the current node A.

2. The geolocation method according to claim 1, **characterized in that** it comprises at least the following steps:
• Determine a first sub-graph V₁ of the neighbor nodes of the current node A by considering the nodes in N hops maximum with N greater than or equal to zero, (601), then
• Determine the largest observable sub-graph V₃ on the basis of the first sub-graph of the neighbors V₁ containing the node A, by executing the following steps:
• Determine if there are at least three nodes belonging to the first sub-graph V₁ and having a position estimation at their disposal, (602),
• If there are not at least three nodes belonging to the first sub-graph V₁ and having a position estimation, then, there is no observable neighborhood of the node A included in the first sub-graph V₁ and the node A is not locatable, (603),
• If there are at least three nodes belonging to the first sub-graph V₁ with a position estimation, then, (604) a second sub-graph V₂ is constructed, by eliminating from the first sub-graph V₁ the nodes which are different from the node A, which do not contain any position estimation and which have a number less than or equal to 2 of edges departing from the node,
• (605) - Test whether the second sub-graph V₂ is observable, if such is the case, define the largest sub-graph V₃ as being the second sub-graph V₂, (606),
• Otherwise, traverse the sub-graphs of V₂ containing the node A (607),
• Execute (609) a geolocation algorithm on the nodes contained in the largest sub-graph V₃ existing, so as to determine the position of the current node A.

3. The method according to claim 2, **characterized in that** the observability test of a sub-graph implements a global-rigidity test.

4. The method according to claim 3, **characterized in that** the global-rigidity test comprises the following steps:
• Verify that a sub-graph remains connected when any two vertices are removed,
• Verify that a sub-graph remains rigid on removing any edge.

5. The method according to one of the preceding claims, **characterized in that** the network is a decentralized communication network and the position of the nodes of said network is determined.

6. A device for geolocating one or more nodes in a network, the nodes being equipped with senders-receivers and with communication means, **characterized in that** each of the nodes comprises at least the following elements:
• A processor (41) adapted to execute the steps of the method according to one of claims 1 to 5,
• A device (44) allowing a node to self-geolocate,
• A table (43) storing the topology information of the other nodes.

7. The device according to claim 6, **characterized in that** the network is an ad-hoc communication network.
